(19) Europäisches Patentamt
European Patent Office
Office européen des brevets

(11) **EP 3 901 587 B1**

(12) **FASCICULE DE BREVET EUROPEEN**

(45) Date de publication et mention
de la délivrance du brevet:
**31.08.2022 Bulletin 2022/35**

(21) Numéro de dépôt: **21169565.5**

(22) Date de dépôt: **21.04.2021**

(51) Classification Internationale des Brevets (IPC):
*G01F 1/66* (2022.01)  *G01F 1/74* (2006.01)
*G01N 29/032* (2006.01)  *G01F 1/667* (2022.01)
*G01N 29/024* (2006.01)  *G01N 29/38* (2006.01)

(52) Classification Coopérative des Brevets (CPC):
**G01F 1/668; G01F 1/667; G01F 1/74;**
**G01N 29/032;** G01N 2291/015; G01N 2291/02433;
G01N 2291/048; G01N 2291/102

(54) **PROCÉDÉ DE MESURE ULTRASONIQUE AVEC PRISE EN COMPTE DE LA QUANTITÉ DE BULLES GAZEUSES**

ULTRASCHALL-MESSVERFAHREN MIT BERÜCKSICHTIGUNG DER GASBLASENMENGE

ULTRASONIC MEASUREMENT METHOD TAKING INTO ACCOUNT THE AMOUNT OF GAS BUBBLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2020 FR 2004030**

(43) Date de publication de la demande:
**27.10.2021 Bulletin 2021/43**

(73) Titulaire: **Sagemcom Energy & Telecom SAS**
**92500 Rueil-Malmaison (FR)**

(72) Inventeur: **TEBOULLE, Henri**
**92500 Rueil Malmaison (FR)**

(74) Mandataire: **Lavaud, Thomas et al**
**Cabinet Boettcher**
**16, rue Médéric**
**75017 Paris (FR)**

(56) Documents cités:
**EP-A1- 2 636 999     EP-A2- 2 717 026**
**US-A- 4 763 525     US-A1- 2013 345 996**

## Description

L'invention concerne le domaine des dispositifs de mesure ultrasoniques, qui sont intégrés par exemple dans des compteurs de fluide.

### ARRIERE PLAN DE L'INVENTION

Les compteurs d'eau modernes sont des compteurs communicants qui, bien sûr, mesurent la consommation d'eau de l'installation d'un abonné, mais qui remplissent par ailleurs de nouvelles fonctions : détection de fuite, optimisation de la facturation, relevé à distance, etc.

Alors que les compteurs d'eau traditionnels utilisent classiquement un dispositif de mesure mécanique, les compteurs d'eau modernes utilisent généralement un dispositif de mesure ultrasonique.

Un dispositif de mesure ultrasonique comporte un conduit dans lequel s'écoule avec un certain débit l'eau fournie à l'installation. Pour évaluer le débit de l'eau, le dispositif de mesure ultrasonique émet dans le conduit un signal ultrasonore de mesure parcourant un trajet de longueur définie, mesure les temps de trajet mis par le signal ultrasonore de mesure pour parcourir le trajet de longueur définie d'amont en aval et d'aval en amont, et estime la vitesse de l'eau à partir notamment de la longueur définie et de la différence entre les temps de trajet.

Un tel dispositif de mesure ultrasonique présente un certain nombre d'avantages par rapport à un dispositif de mesure mécanique. En particulier, un dispositif de mesure ultrasonique est hermétique et ne comporte pas de pièce mobile, et ne subit donc ni fuite ni usure mécanique : sa précision ne se dégrade pas (ou très peu) dans le temps.

Un dispositif de mesure ultrasonique est cependant sensible à la présence de bulles d'air dans l'eau, qui peuvent être générées par la survenue d'un vortex, c'est-à-dire d'un tourbillon qui se produit dans l'écoulement d'eau. La vitesse du son dans l'air (environ 340m/s) est nettement plus faible que la vitesse du son dans l'eau (environ 1500m/s), de sorte que la présence de bulles d'air peut perturber significativement la mesure des temps de trajet.

Le document EP 2 717 026 A2 décrit un tel dispositif de mesure ultrasonique. Ce document enseigne d'évaluer la quantité de bulles gazeuses dans le fluide, et d'émettre une alarme si la quantité de bulles est trop importante.

Le document US 4 763 525 A divulgue un procédé pour déterminer la quantité de bulles gazeuses dans un fluide.

### OBJET DE L'INVENTION

L'invention a pour objet d'améliorer la précision d'un dispositif de mesure ultrasonique.

### RESUME DE L'INVENTION

En vue de la réalisation de ce but, on propose un procédé de mesure d'une vitesse d'un fluide, comportant :

- une phase de mesure comprenant les étapes d'émettre un signal ultrasonore de mesure, d'acquérir un signal ultrasonore principal issu du signal ultrasonore de mesure après que le signal ultrasonore de mesure a parcouru dans le fluide un trajet de longueur définie, le signal ultrasonore principal étant destiné à être analysé pour produire une mesure présente de temps de trajet du signal ultrasonore de mesure ;
- une phase de validation de la mesure présente, comprenant les étapes d'acquérir un signal ultrasonore secondaire issu lui aussi du signal ultrasonore de mesure mais retardé à cause de la présence de bulles gazeuses dans le fluide, d'évaluer dans le signal ultrasonore secondaire un ou des premiers paramètres représentatifs d'une quantité de bulles gazeuses dans le fluide, et de valider ou d'invalider la mesure présente en fonction du ou des premiers paramètres.

Le procédé de mesure selon l'invention analyse donc le signal ultrasonore secondaire pour évaluer la quantité de bulles gazeuses dans le fluide et déterminer ainsi si les bulles gazeuses ont perturbé de manière significative ou non le signal ultrasonore principal.

Le procédé de mesure est particulièrement astucieux : les distorsions possiblement subies par le signal ultrasonore principal, qui est utilisé pour produire la mesure présente de temps de trajet, sont évaluées non pas à partir d'une analyse du signal ultrasonore principal luimême, mais à partir d'une analyse du signal ultrasonore secondaire. Le signal ultrasonore secondaire est retardé à cause de la présence des bulles gazeuses qui provoquent un phénomène de multi-trajet dans le fluide.

Si la quantité de bulles gazeuses dans le fluide est trop importante, la mesure présente est invalidée. On améliore donc la précision des mesures en éliminant les mesures dont la précision est dégradée par les bulles gazeuses.

On propose de plus un procédé de mesure tel que précédemment décrit, dans lequel le ou les premiers paramètres comprennent un nombre de lobes du signal ultrasonore secondaire qui sont supérieurs ou égaux à un seuil d'amplitude prédéfini, et dans lequel la mesure présente est invalidée lorsque le nombre de lobes du signal ultrasonore secondaire qui sont supérieurs ou égaux au seuil d'amplitude prédéfini est supérieur à un nombre prédéfini.

On propose de plus un procédé de mesure tel que précédemment décrit, dans lequel la phase de validation comprend en outre les étapes d'évaluer dans le signal ultrasonore secondaire un ou des deuxièmes paramètres représentatifs de la quantité de bulles gazeuses dans le fluide, et, si la mesure présente est invalidée, de remplacer la mesure présente par une mesure précédente, réalisée avant la mesure présente et corrigée en fonction du ou des deuxièmes paramètres.

On propose de plus un procédé de mesure tel que précédemment décrit, dans lequel les deuxièmes paramètres comprennent un temps particulier représentatif d'un retard du signal ultrasonore secondaire et une amplitude maximale du signal ultrasonore secondaire.

On propose de plus un procédé de mesure tel que précédemment décrit, dans lequel la correction de la mesure précédente consiste à multiplier ladite mesure précédente par un coefficient de correction défini par la formule suivante :

$$M = min\left(\left(1 - \frac{t_2 - t_1}{(t_{max} - t_p) - t_1}\right); \left(1 - \frac{U' - U}{U_{max} - U}\right)\right),$$

où :

- M est le coefficient de correction ;
- $t_2$ est le temps particulier représentatif du retard du signal ultrasonore secondaire ;
- $t_1$ est un temps de début d'écoute du signal ultrasonore secondaire ;
- $t_{max}$ est une durée entre un temps de début d'écoute $t_0$ du signal ultrasonore principal et un temps de fin d'écoute du signal ultrasonore secondaire ;
- U est le seuil d'amplitude prédéfini ;
- U' est l'amplitude maximale du signal ultrasonore secondaire ;
- $U_{max}$ est un niveau maximum qu'aucun lobe du signal ultrasonore secondaire ne pourra dépasser ;
- $t_p$ est une valeur temporelle prédéfinie.

On propose en outre un dispositif de mesure ultrasonique comprenant un transducteur amont, un transducteur aval, et un composant de traitement dans lequel est mis en œuvre le procédé de mesure précédemment décrit.

On propose aussi un compteur de fluide comprenant un dispositif de mesure ultrasonique tel que précédemment décrit.

On propose aussi un dispositif médical comprenant un dispositif de mesure ultrasonique tel que précédemment décrit.

On propose en outre un programme d'ordinateur comprenant des instructions qui conduisent le dispositif de mesure ultrasonique tel que précédemment décrit à exécuter les étapes du procédé de mesure qui vient d'être décrit.

On propose aussi un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig. 1] la figure 1 représente un dispositif de mesure ultrasonique d'un compteur d'eau dans lequel est mise en œuvre l'invention ;
[Fig. 2] la figure 2 représente un signal ultrasonore principal et un signal ultrasonore secondaire.

DESCRIPTION DETAILLEE DE L'INVENTION

L'invention est ici mise en œuvre dans un compteur d'eau qui est utilisé pour mesurer la consommation d'eau de l'installation d'un abonné. L'eau est fournie à l'installation par un réseau de distribution d'eau.

Le compteur d'eau comporte tout d'abord un module de communication qui permet au compteur d'eau de communiquer avec un Système d'Information (SI) du gestionnaire du réseau, éventuellement via un concentrateur de données, une passerelle, ou bien un autre compteur (tel qu'un compteur d'eau communicant de quartier). Le module de communication est susceptible de mettre en œuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc. Le compteur d'eau transmet au SI via le module de communication, à intervalles réguliers, les mesures réalisées.

Le compteur d'eau comporte de plus un conduit dans lequel circule l'eau fournie par le réseau de distribution d'eau à l'installation de l'abonné, ainsi qu'un dispositif de mesure ultrasonique.

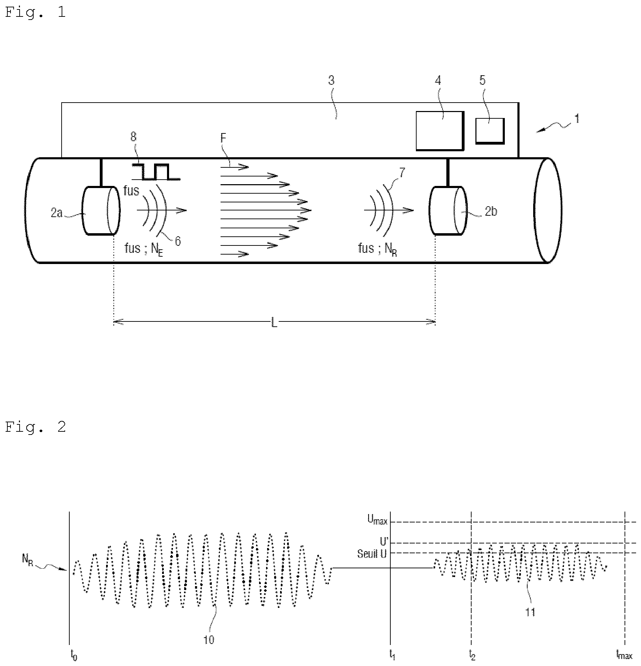

Le dispositif de mesure ultrasonique 1 est visible sur la figure 1.

L'eau circule dans le conduit d'amont en aval, comme cela est indiqué par le sens des flèches F.

Le dispositif de mesure ultrasonique 1 comporte un transducteur amont 2a et un transducteur aval 2b. Le dispositif de mesure ultrasonique 1 comporte aussi un module de mesure 3 relié au transducteur amont 2a et au transducteur aval 2b.

Le transducteur amont 2a et le transducteur aval 2b sont appairés. Le transducteur amont 2a et le transducteur aval 2b sont ici des transducteurs piézoélectriques.

Le module de mesure 3 comporte un composant de traitement 4 qui est adapté à exécuter des instructions d'un programme pour mettre en œuvre toutes ou certaines des étapes du procédé de mesure qui vont être décrites ci-après. Le composant de traitement 4 est par exemple un processeur, un microcontrôleur, ou bien un circuit logique programmable tel qu'un FPGA (pour *Field Programmable Gate Arrays*) ou un ASIC (pour *Application Specific Integrated Circuit*).

Le module de mesure 3 comporte de plus un convertisseur analogique numérique 5 (éventuellement intégré dans le composant de traitement 4).

Le module de mesure 3 pilote le transducteur amont 2a et le transducteur aval 2b.

Le transducteur amont 2a et le transducteur aval 2b remplissent chacun successivement la fonction d'un émetteur de signaux ultrasonores de mesure 6, et la fonction d'un récepteur des signaux ultrasonores de mesure 7 résultant de la propagation des signaux ultrasonores de mesure 6 émis par l'émetteur.

Le module de mesure 3 génère un signal électrique d'excitation 8, et fournit à l'émetteur le signal électrique d'excitation 8.

L'émetteur transforme le signal électrique d'excitation 8 en un signal ultrasonore de mesure 6. Le module de mesure 3 acquiert le signal ultrasonore de mesure 7 qui est reçu par le récepteur.

Le signal électrique d'excitation 8 est ici un signal rectangulaire qui a pour fréquence $f_{us}$ et pour période $T_{us}$. La fréquence $f_{us}$ est classiquement comprise entre 900kHz et 4MHz, et est ici égale à 1MHz.

Le signal ultrasonore de mesure 6 parcourt ainsi, entre le transducteur amont 2a et le transducteur aval 2b, un trajet de longueur définie L d'amont en aval (puis d'aval en amont pour la mesure où c'est le transducteur 2b qui émet). Le trajet de longueur définie est ici un trajet rectiligne entre le transducteur amont 2a et le transducteur aval 2b. La longueur définie L est typiquement égale à 7cm.

Sur la figure 1, on a représenté le transducteur amont 2a remplissant la fonction d'un émetteur et le transducteur aval 2b remplissant la fonction d'un récepteur. Le signal électrique d'excitation 8 est donc appliqué en entrée du transducteur amont 2a pour émettre le signal ultrasonore de mesure 6. Le signal ultrasonore de mesure 6 parcourt donc le trajet de longueur définie L d'amont en aval. Le signal ultrasonore de mesure 6 est émis par l'émetteur avec un niveau $N_E$. Le signal ultrasonore de mesure 7 est reçu par le récepteur avec un niveau $N_R$ inférieur au niveau $N_E$.

Le module de mesure 3 acquiert le signal ultrasonore de mesure 7 après qu'il a parcouru dans l'eau le trajet de longueur définie. Le module de mesure 3 numérise le signal ultrasonore de mesure 7 en utilisant le convertisseur analogique numérique 5, et produit des échantillons de mesure. Pour un signal de fréquence $f_{us}$ = 1MHz, la fréquence d'échantillonnage est typiquement de 4MHz afin de respecter le critère de Shannon.

Le module de mesure 3 mesure le temps de trajet mis par le signal ultrasonore de mesure 6 pour parcourir le trajet de longueur définie d'amont en aval.

Le module de mesure 3 mesure en réalité un temps de transfert global $T_{AB}$ du transducteur amont 2a vers le transducteur aval 2b.

Le temps de transfert global $T_{AB}$ est tel que :

$$T_{AB} = TA_A + ToF_{AB} + TR_B,$$

où :

- $TA_A$ est un temps d'allumage du transducteur amont 2a ;
- $ToF_{AB}$ correspond au temps de vol (Time of Flight, en anglais) mis par le signal ultrasonore de mesure 6 pour parcourir le trajet de longueur définie entre le transducteur amont 2a et le transducteur aval 2b ;
- $TR_B$ est un temps de réception du transducteur aval 2b.

De même, le transducteur aval 2b émet un signal ultrasonore de mesure qui est reçu par le transducteur amont 2a.

Le module de mesure 3 mesure le temps de transfert global $T_{BA}$ qui est tel que :

$$T_{BA}=TA_B+ToF_{BA}+TR_A,$$

où :

- $TA_B$ est un temps d'allumage du transducteur aval 2b ;
- $ToF_{BA}$ correspond au temps de vol mis par le signal ultrasonore de mesure pour parcourir le trajet de longueur définie entre le transducteur aval 2b et le transducteur amont 2a ;
- $TR_A$ est un temps de réception du transducteur amont 2a.

En supposant que :
$TA_A=TA_B$ et $TR_A=TR_B$ (transducteurs appairés), on obtient :

$$\Delta T=T_{BA}-T_{AB}=ToF_{BA}-ToF_{AB}=DToF,$$

où DToF est le temps de vol différentiel (*Differential Time of Flight*) .

Or, le DToF est proportionnel à la vitesse moyenne de l'eau, et le module de mesure 3 calcule alors la vitesse moyenne de l'eau en utilisant le DToF. La vitesse moyenne est signée et peut être positive, négative ou nulle.

Le module de mesure 3 déduit alors de la vitesse moyenne le débit d'eau circulant dans le conduit, et du débit d'eau le volume d'eau consommé par l'installation.

Cependant, le signal ultrasonore de mesure 6, lorsqu'il se propage dans l'eau, peut être perturbé par la présence de bulles d'air dans l'eau.

A cause de ces bulles d'air, le récepteur ne reçoit pas un unique signal associé à un signal ultrasonore de mesure 6 qui vient d'être émis, mais une pluralité de signaux qui comprennent un signal ultrasonore principal et un ou des signaux ultrasonores secondaires qui arrivent avec un certain retard par rapport au signal ultrasonore principal.

Chaque signal ultrasonore secondaire correspond à une partie du signal ultrasonore de mesure qui a traversé des bulles d'air avant d'arriver au récepteur. Le ou les signaux ultrasonores secondaires résultent donc d'un phénomène de multi-trajet : alors qu'une partie principale du signal ultrasonore de mesure s'est propagée directement dans l'eau pour atteindre le transducteur remplissant la fonction de récepteur, formant ainsi le signal ultrasonore principal, une ou des parties secondaires du signal ultrasonore de mesure se sont propagées via des bulles d'air et ont donc atteint le récepteur avec un certain retard (à la manière d'un écho).

Le composant de traitement 4 ne peut pas détecter, à partir du seul signal ultrasonore principal, si celui-ci a été ou non perturbé de manière importante.

Or, la précision de la mesure de temps de trajet doit être extrêmement précise (de l'ordre de la ps), et la moindre distorsion du signal peut être fatale.

Le procédé de mesure selon l'invention consiste donc à acquérir (au moins) un signal ultrasonore secondaire, à analyser le signal ultrasonore secondaire, et à déterminer, à partir de cette analyse, si le signal ultrasonore principal est éligible ou non à la mesure.

Le procédé de mesure selon l'invention comporte donc des phases de mesure et des phases de validation.

Au cours de chaque phase de mesure, le dispositif de mesure ultrasonique 1 acquiert un signal ultrasonore principal permettant de produire une mesure présente de temps de trajet.

Les phases de mesure sont répétées régulièrement. On réalise ici 8 mesures de temps de trajet amont-aval et 8 mesures de temps de trajet aval-amont par seconde.

Le procédé de mesure selon l'invention comporte aussi, pour chaque phase de mesure, une phase de validation, au cours de laquelle le dispositif de mesure ultrasonique 1 acquiert un signal ultrasonore secondaire dont l'analyse permet de valider ou d'invalider la mesure présente de temps de trajet réalisée au cours de ladite phase de mesure.

Les phases de validation permettent d'améliorer la précision des mesures en filtrant les mesures réalisées lorsque que les bulles d'air sont présentes en quantité trop importante (c'est-à-dire en ne tenant pas compte desdites mesures).

Chaque phase de mesure est réalisée de la manière suivante. Le composant de traitement 4 du module de mesure 3 émet, via l'un des transducteurs 2 (amont 2a ou aval 2b) remplissant le rôle d'émetteur, un signal ultrasonore de mesure. Puis, en référence à la figure 2, le composant de traitement 4 acquiert, via l'autre des transducteurs 2 (aval 2b ou amont 2a) qui remplit alors le rôle de récepteur, un signal ultrasonore principal 10 issu du signal ultrasonore de mesure après que le signal ultrasonore de mesure a parcouru dans le fluide le trajet de longueur définie.

Pour acquérir le signal ultrasonore principal 10, le dispositif de mesure ultrasonique 1 démarre une fenêtre d'écoute principale à partir du temps de début d'écoute $t_0$ du signal ultrasonore principal 10. La fenêtre d'écoute principale a une durée égale ici à 25ps.

Le signal ultrasonore principal 10 est échantillonné par le convertisseur analogique numérique 5 du module de mesure 3 puis analysé par le composant de traitement 4 du module de mesure 3 pour produire une mesure présente de temps de trajet du signal ultrasonore de mesure.

L'analyse peut par exemple consister à déterminer un moment de survenue d'un lobe prédéterminé du signal ultrasonore principal 10. Le moment de survenue est par exemple l'instant où survient un front descendant du lobe prédéterminé. Le moment de survenue est un instant de passage par zéro qui peut être mesuré par une méthode du type « Zero Crossing ».

Le lobe prédéterminé est par exemple un $i^{ème}$ lobe (c'est-à-dire par exemple le quatrième ou le cinquième lobe) du signal ultrasonore principal 10 après qu'une amplitude du signal ultrasonore principal 10 a dépassé un niveau prédéterminé.

Puis, le dispositif de mesure ultrasonique 1 met en œuvre une phase de validation, associée à la phase de mesure qui vient d'être décrite, pour déterminer si le signal ultrasonore principal 10 est éligible ou non à la mesure.

La phase de validation consiste tout d'abord à tenter d'acquérir un signal ultrasonore secondaire 11 issu lui aussi du signal ultrasonore de mesure mais retardé à cause de la présence de bulles d'air dans l'eau.

Pour acquérir le signal ultrasonore secondaire 11, le dispositif de mesure ultrasonique 1 démarre une fenêtre d'écoute secondaire à partir du temps de début d'écoute $t_1$ du signal ultrasonore secondaire 11. Le temps de début d'écoute $t_1$ est tel que :

$$t_1 = t_0 + t_{ec}.$$

Ici, $t_{ec} = 80\ \mu s$.

Le dispositif de mesure ultrasonique 1 écoute jusqu'au temps $t_0 + t_{max}$,

$t_{max}$ étant donc la durée entre le temps de début d'écoute $t_0$ du signal ultrasonore principal 10 et le temps de fin d'écoute du signal ultrasonore secondaire 11.

Ici, $t_{max} = 200\mu s$.

Le composant de traitement 4 évalue alors dans le signal ultrasonore secondaire 11 un ou des premiers paramètres représentatifs d'une quantité de bulles d'air dans l'eau, et valide ou invalide la mesure présente de temps de trajet en fonction du ou des premiers paramètres.

Ici, le ou les premiers paramètres comprennent un nombre de lobes du signal ultrasonore secondaire 11 qui sont supérieurs ou égaux à un seuil d'amplitude prédéfini U.

La mesure présente est invalidée lorsque le nombre de lobes du signal ultrasonore secondaire 11, qui sont supérieurs ou égaux au seuil d'amplitude prédéfini U, est supérieur à un nombre prédéfini.

Le nombre prédéfini est ici égal à 5.

Ainsi, si le composant de traitement 4 détecte plus de 5 lobes $\geq$ U, alors le composant de traitement 4 considère qu'il y a suffisamment de bulles d'air dans l'eau pour perturber significativement la mesure présente. La mesure présente est donc invalidée et n'est pas utilisée pour estimer le débit d'eau et donc le volume d'eau consommé par l'installation.

La phase de validation comprend en outre les étapes d'évaluer dans le signal ultrasonore secondaire 11 un ou des deuxièmes paramètres représentatifs de la quantité de bulles d'air dans l'eau, et, si la mesure présente est invalidée, de remplacer la mesure présente par une mesure précédente, réalisée dans la même période d'1s mais avant la mesure présente, et corrigée en fonction du ou des deuxièmes paramètres.

Les deuxièmes paramètres comprennent ici un temps particulier représentatif du retard du signal ultrasonore secondaire 11 et une amplitude maximale du signal ultrasonore secondaire 11.

Le retard du signal ultrasonore secondaire 11 (à droite de $t_1$) et son amplitude maximale donnent en effet une idée de la quantité de bulles d'air ayant perturbé la mesure présente.

Le temps particulier $t_2$ est ici l'instant de passage par 0 dans le sens descendant (évalué par « Zéro Crossing ») du premier lobe du signal ultrasonore secondaire 11 dépassant le seuil d'amplitude prédéfini U.

La correction de la mesure précédente, qui remplace la mesure présente, consiste à multiplier la mesure précédente par un coefficient de correction défini par la formule suivante :

$$M = min\left(\left(1 - \frac{t_2 - t_1}{(t_{max} - t_p) - t_1}\right) ; \left(1 - \frac{U' - U}{U_{max} - U}\right)\right),$$

où :

- M est le coefficient de correction ;
- $t_2$ est le temps particulier représentatif du retard du signal ultrasonore secondaire 11 ;
- $t_1$ est le temps de début d'écoute du signal ultrasonore secondaire 11 ;
- $t_{max}$ est la durée entre le temps de début d'écoute $t_0$ du signal ultrasonore principal 10 et le temps de fin d'écoute du signal ultrasonore secondaire 11 ;
- U est le seuil d'amplitude prédéfini ;
- U' est l'amplitude maximale du signal ultrasonore secondaire 11 ;
- $U_{max}$ est un niveau maximum qu'aucun lobe du signal ultrasonore secondaire 11 ne pourra dépasser ;
- $t_p$ est une valeur temporelle prédéfinie.

On utilise donc, à la place de la mesure présente, un pourcentage de la mesure précédente.

Plus le retard est important et/ou plus l'amplitude maximale du signal ultrasonore secondaire 11 est élevée, plus le niveau de bulles d'air est important, et donc plus la valeur de la mesure précédente est réduite.

La valeur temporelle prédéfinie $t_p$ permet de tenir compte du fait qu'au moins 5 lobes du signal ultrasonore secondaire 11 atteignent ou dépassent le seuil d'amplitude prédéfini U.

On a donc vu que, dans le cas de la présence importante de bulles d'air, la mesure présente ne sera pas prise en compte. Si toutefois, sur une seconde, les 8 mesures ne sont pas prises en compte, on remplace la valeur moyenne par celle mesurée sur la seconde suivante. Dans le cas où, sur 3 secondes consécutives, les 8 mesures ne sont pas prises en compte, on considère les mesures comme nulles.

Bien entendu, l'invention n'est pas limitée au mode de réalisation décrit mais englobe toute variante entrant dans le champ de l'invention telle que définie par les revendications.

On a vu que, si la quantité de bulles d'air est trop importante, la mesure présente de temps de trajet est invalidée. L'invalidation de la mesure présente peut avoir lieu après que le temps de trajet a été évalué, comme cela est décrit ici, ou bien avant : on peut très bien prévoir d'analyser le signal ultrasonore secondaire avant d'analyser le signal ultrasonore principal, et donc d'invalider la mesure présente (à partir de l'analyse du signal ultrasonore secondaire) sans même avoir évalué le temps de trajet à partir du signal ultrasonore principal.

Même si ce n'est pas le cas ici, le ou les premiers paramètres pourraient être identiques au ou aux deuxièmes paramètres.

Le compteur, intégrant le dispositif de mesure ultrasonique dans lequel est mise en œuvre l'invention, n'est pas nécessairement un compteur d'eau, mais peut être un compteur de tout fluide susceptible de contenir des bulles gazeuses. Le fluide en question est par exemple un liquide autre que l'eau, ou bien du pétrole.

Le dispositif de mesure ultrasonique n'est pas nécessairement intégré dans un compteur, mais pourrait être intégré dans un autre type de dispositif, et par exemple dans un dispositif médical qui nécessite de mesurer un débit sanguin.

**Revendications**

1. Procédé de mesure d'une vitesse d'un fluide, comportant :

    - une phase de mesure comprenant les étapes d'émettre un signal ultrasonore de mesure, d'acquérir un signal ultrasonore principal (10) issu du signal ultrasonore de mesure après que le signal ultrasonore de mesure a parcouru dans le fluide un trajet de longueur définie (L), le signal ultrasonore principal (10) étant destiné à être analysé pour produire une mesure présente de temps de trajet du signal ultrasonore de mesure ;
    le procédé de mesure étant **caractérisé en ce qu'**il comporte en outre une phase de validation de la mesure présente, comprenant les étapes d'acquérir un signal ultrasonore secondaire (11) issu lui aussi du signal ultrasonore de mesure mais retardé à cause de la présence de bulles gazeuses dans le fluide, d'évaluer dans le signal ultrasonore secondaire (11) un ou des premiers paramètres représentatifs d'une quantité de bulles gazeuses dans le fluide, et de valider ou d'invalider la mesure présente en fonction du ou des premiers paramètres.

2. Procédé de mesure selon la revendication 1, dans lequel le ou les premiers paramètres comprennent un nombre de lobes du signal ultrasonore secondaire (11) qui sont supérieurs ou égaux à un seuil d'amplitude prédéfini (U), et dans lequel la mesure présente est invalidée lorsque le nombre de lobes du signal ultrasonore secondaire (11) qui sont supérieurs ou égaux au seuil d'amplitude prédéfini (U) est supérieur à un nombre prédéfini.

**3.** Procédé de mesure selon l'une des revendications précédentes, dans lequel la phase de validation comprend en outre les étapes d'évaluer dans le signal ultrasonore secondaire (11) un ou des deuxièmes paramètres représentatifs de la quantité de bulles gazeuses dans le fluide, et, si la mesure présente est invalidée, de remplacer la mesure présente par une mesure précédente, réalisée avant la mesure présente et corrigée en fonction du ou des deuxièmes paramètres.

**4.** Procédé de mesure selon la revendication 3, dans lequel les deuxièmes paramètres comprennent un temps parti-culier ($t_2$) représentatif d'un retard du signal ultrasonore secondaire (11) et une amplitude maximale (U') du signal ultrasonore secondaire (11).

**5.** Procédé de mesure selon les revendications 2 et 4, dans lequel la correction de la mesure précédente consiste à multiplier ladite mesure précédente par un coefficient de correction défini par la formule suivante :

$$M = min(\left(1 - \frac{t_2 - t_1}{(t_{max} - t_p) - t_1}\right) ; \left(1 - \frac{U' - U}{U_{max} - U}\right)),$$

où :

- M est le coefficient de correction ;
- $t_2$ est le temps particulier représentatif du retard du signal ultrasonore secondaire (11) ;
- $t_1$ est un temps de début d'écoute du signal ultrasonore secondaire (11) ;
- $t_{max}$ est une durée entre un temps de début d'écoute $t_0$ du signal ultrasonore principal (10) et un temps de fin d'écoute du signal ultrasonore secondaire (11) ;
- U est le seuil d'amplitude prédéfini ;
- U' est l'amplitude maximale du signal ultrasonore secondaire (11) ;
- $U_{max}$ est un niveau maximum qu'aucun lobe du signal ultrasonore secondaire (11) ne pourra dépasser ;
- $t_p$ est une valeur temporelle prédéfinie.

**6.** Dispositif de mesure ultrasonique comprenant un transducteur amont (2a), un transducteur aval (2b), et un composant de traitement (4) dans lequel est mis en œuvre le procédé de mesure selon l'une des revendications précédentes.

**7.** Compteur de fluide comprenant un dispositif de mesure ultrasonique selon la revendication 6.

**8.** Dispositif médical comprenant un dispositif de mesure ultrasonique selon la revendication 6.

**9.** Programme d'ordinateur comprenant des instructions qui conduisent le dispositif de mesure ultrasonique selon la revendication 6 à exécuter les étapes du procédé de mesure selon l'une des revendications 1 à 5.

**10.** Support d'enregistrement lisible par ordinateur, sur lequel est enregistré le programme d'ordinateur selon la revendication 9.


**Patentansprüche**

**1.** Messverfahren zum Messen einer Geschwindigkeit eines Fluids, umfassend:

- eine Messphase, die die Schritte des Sendens eines Ultraschallmesssignals, und des Erfassens eines Hauptultraschallsignals (10) einschließt, das von dem Ultraschallmesssignal stammt, nachdem das Ultraschallmesssignal in dem Fluid einen Pfad definierter Länge (L) zurückgelegt hat, wobei das Hauptultraschallsignal (10) dazu bestimmt ist, analysiert zu werden, um eine aktuelle Messung der Laufzeit des Ultraschallmesssignals zu erzeugen;
wobei das Messverfahren **dadurch gekennzeichnet ist, dass** es ferner eine Validierungsphase zum Validieren der aktuellen Messung umfasst, die die Schritte des Erfassens eines sekundären Ultraschallsignals (11), das ebenfalls von dem Ultraschallmesssignal stammt, aber wegen des Vorhandenseins von Gasblasen in dem Fluid verzögert ist, des Evaluierens von einem oder mehreren ersten Parametern in dem sekundären Ultraschallsignal (11), die repräsentativ für eine Menge an Gasblasen in dem Fluid sind, und des Validierens oder Annullierens der aktuellen Messung in Abhängigkeit von dem oder den ersten Parametern einschließt.

2. Messverfahren nach Anspruch 1, bei dem der oder die ersten Parameter eine Anzahl an Keulen des sekundären Ultraschallsignals (11) umfassen, die größer oder gleich einem vordefinierten Amplitudenschwellenwert (U) sind, und bei dem die aktuelle Messung annulliert wird, wenn die Anzahl an Keulen des sekundären Ultraschallsignals (11), die größer oder gleich dem vordefinierten Amplitudenschwellenwert (U) sind, größer als eine vordefinierte Anzahl ist.

3. Messverfahren nach einem der vorhergehenden Ansprüche, bei dem die Validierungsphase ferner die Schritte des Evaluierens von einem oder mehreren zweiten Parametern in dem sekundären Ultraschallsignal (11), die repräsentativ für die Menge an Gasblasen in dem Fluid sind, und, wenn die aktuelle Messung annulliert wird, des Ersetzens der aktuellen Messung durch eine vorhergehende Messung einschließt, die vor der aktuellen Messung durchgeführt und in Abhängigkeit von dem oder den zweiten Parametern korrigiert wurde.

4. Messverfahren nach Anspruch 3, bei dem die zweiten Parameter eine besondere Zeit ($t_2$) umfassen, die repräsentativ für eine Verzögerung des sekundären Ultraschallsignals (11) und eine maximale Amplitude (U') des sekundären Ultraschallsignals (11) ist.

5. Messverfahren nach den Ansprüchen 2 und 4, bei dem die Korrektur der vorhergehenden Messung darin besteht, die genannte vorhergehende Messung mit einem Korrekturkoeffizienten zu multiplizieren, der durch die folgende Formel definiert ist:

$$M = \min\left(\left(1 - \frac{t_2 - t_1}{(t_{max} - t_p) - t_1}\right); \left(1 - \frac{U' - U}{U_{max} - U}\right)\right),$$

wobei:

- M der Korrekturkoeffizient ist;
- $t_2$ die besondere Zeit ist, die repräsentativ für die Verzögerung des sekundären Ultraschallsignals (11) ist;
- $t_1$ eine Zeit des Beginns des Hörens des sekundären Ultraschallsignals (11) ist;
- $t_{max}$ eine Dauer zwischen einer Zeit des Beginns des Hörens $t_0$ des Hauptultraschallsignals (10) und einer Zeit des Endes des Hörens des sekundären Ultraschallsignals (11) ist;
- U der vordefinierte Amplitudenschwellenwert ist;
- U' die maximale Amplitude des sekundären Ultraschallsignals (11) ist;
- $U_{max}$ ein maximales Niveau ist, das keine Keule des sekundären Ultraschallsignals (11) überschreiten darf;
- $t_p$ ein vordefinierter Zeitwert ist.

6. Ultraschallmessvorrichtung, umfassend einen stromaufwärtigen Wandler (2a), einen stromabwärtigen Wandler (2b) und eine Verarbeitungskomponente (4), in der das Messverfahren nach einem der vorhergehenden Ansprüche durchgeführt wird.

7. Fluidzähler, umfassend eine Ultraschallmessvorrichtung nach Anspruch 6.

8. Medizinische Vorrichtung, umfassend eine Ultraschallmessvorrichtung nach Anspruch 6.

9. Computerprogramm, umfassend Anweisungen, die die Ultraschallmessvorrichtung nach Anspruch 6 veranlassen, die Schritte des Messverfahrens nach einem der Ansprüche 1 bis 5 auszuführen.

10. Computerlesbarer Aufzeichnungsträger, auf dem das Computerprogramm nach Anspruch 9 gespeichert ist.

**Claims**

1. A measurement method for measuring the speed of a fluid, the method comprising:

   • a measurement stage comprising the steps of emitting a measurement ultrasonic signal and of acquiring a main ultrasonic signal (10) resulting from the measurement ultrasonic signal after the measurement ultrasonic signal has travelled along a path of defined length (L) through the fluid, the main ultrasonic signal (10) being for analyzing in order to produce a present measurement of the travel time of the measurement ultrasonic signal; the measurement method being **characterized in that** it further comprises a validation stage for validating the present measurement, the validation stage comprising the steps of acquiring a secondary ultrasonic signal (11) also resulting from the measurement ultrasonic signal but delayed because of the presence of gas bubbles in the fluid, of evaluating one or more first parameters in the secondary ultrasonic signal (11) that are representative of the quantity of gas bubbles in the fluid, and of validating or invalidating the present measurement as a function of the first parameter(s).

2. A measurement method according to claim 1, wherein the first parameter(s) comprise(s) a number of lobes of the secondary ultrasonic signal (11) that are greater than or equal to a predefined amplitude threshold (U), and wherein the present measurement is invalidated when the number of lobes of the secondary ultrasonic signal (11) that are greater or equal to the predefined amplitude threshold (U) is greater than a predefined number.

3. A measurement method according to any preceding claim, wherein the validation stage also comprises a step of evaluating one or more second parameters in the secondary ultrasonic signal (11) that are representative of the quantity of gas bubbles in the fluid, and if the present measurement is invalidated, a step of replacing the present measurement by a preceding measurement, taken before the present measurement, and corrected as a function of the second parameter(s).

4. A measurement method according to claim 3, wherein the second parameters comprise both a particular time ($t_2$) that is representative of a delay of the secondary ultrasonic signal (11) and also the maximum amplitude (U') of the secondary ultrasonic signal (11).

5. A measurement method according to claims 2 and 4, wherein the correction of the preceding measurement consists in multiplying said preceding measurement by a correction coefficient defined by the following formula:

$$M = min\left(\left(1 - \frac{t_2 - t_1}{(t_{max} - t_p) - t_1}\right); \left(1 - \frac{U' - U}{U_{max} - U}\right)\right),$$

where:

• M is the correction coefficient;
• $t_2$ is the particular time representative of the delay of the secondary ultrasonic signal (11);
• $t_1$ is the start of a listening time for listening for the secondary ultrasonic signal (11);
• $t_{max}$ is the duration between the start of a listening time to for listening for the main ultrasonic signal (10) and the end of the listening time for listening for the secondary ultrasonic signal (11);
• U is the predefined amplitude threshold;
• U' is the maximum amplitude of the secondary ultrasonic signal (11);
• $U_{max}$ is a maximum level not to be exceeded by any lobe of the secondary ultrasonic signal (11);
• $t_p$ is a predefined time value.

6. An ultrasonic measuring device comprising an upstream transducer (2a), a downstream transducer (2b), and a processor component (4) that performs the measurement method according to any preceding claim.

7. A fluid meter including an ultrasonic measuring device according to claim 6.

8. A medical device including an ultrasonic measuring device according to claim 6.

9. A computer program including instructions for causing the measuring device according to claim 6 to execute the steps of the measurement method according to any one of claims 1 to 5.

10. A computer readable storage medium having stored thereon the computer program according to claim 9.

Fig. 1

Fig. 2

**EP 3 901 587 B1**

## RÉFÉRENCES CITÉES DANS LA DESCRIPTION

### Documents brevets cités dans la description

- EP 2717026 A2

- US 4763525 A